# EUROPÄISCHE PATENTSCHRIFT

(11) **EP 2 703 276 B1**
(45) Veröffentlichungstag und Bekanntmachung des Hinweises auf die Patenterteilung: **20.05.2015**
(21) Anmeldenummer: 13178687.3
(22) Anmeldetag: 31.07.2013
(51) Int. Cl.: B62M 6/45

(54) **Hilfsantriebsvorrichtung, Fahrzeug mit einer Hilfsantriebsvorrichtung und Verfahren zum Betreiben eines Fahrzeugs**
Auxiliary drive device, vehicle with an auxiliary drive device and method for operating a vehicle
Dispositif d'entraînement auxiliaire, véhicule doté d'un dispositif d'entraînement auxiliaire et procédé de fonctionnement d'un véhicule

(30) Priorität: 29.08.2012 DE 102012107963
(43) Veröffentlichungstag der Anmeldung: 05.03.2014
(73) Patentinhaber: Alber GmbH, 72461 Albstadt-Tailfingen (DE)
(72) Erfinder: Engels, Bernd, 72760 Reutlingen (DE); Giocondi, Attilio, 72336 Balingen (DE)
(74) Vertreter: Staudt, Hans-Peter

(56) Entgegenhaltungen:
- JP-A- 2001 030 974
- JP-A- 2011 143 752
- US-A1- 2011 071 714

## Beschreibung

Die Erfindung betrifft eine Hilfsantriebsvorrichtung für ein Fahrzeug, insbesondere ein Fahrrad, ein Fahrzeug mit einer derartigen Hilfsantriebsvorrichtung und ein Verfahren zum Betreiben eines Fahrzeugs.

Die Verwendung von Elektromotoren, insbesondere Radnabenmotoren, zum Antrieb eines Fahrzeugs, insbesondere eines Fahrrads, ist aus dem Stand der Technik bekannt. Die DE 10 2010 032 853 A1 offenbart ein Fahrrad mit beschränkter Tretunterstützung (Pedelec), bei der der Elektromotor nur anspringt, wenn in die Pedale getreten wird. Der Motor unterstützt also nur das Treten. Für das Einschalten oder die Steuerung des Motors kann beispielsweise die Kraft oder das Drehmoment über das Signal eines Kraftsensors an den Pedalen, der Tretkurbel, der Kette oder am Rad gemessen werden. Weiterhin ist es möglich, die Tretgeschwindigkeit über das Signal eines Umdrehungszählers oder Schwellenwertschalters an der Kurbel oder an anderen geeigneten Stellen zu erfassen.

Der bekannte Radnabenmotor kann im Generatorbetrieb auch als Nutzbremse fungieren. Der elektrische Strom, den der Radnabenmotor im Generatorbetrieb erzeugt, wird zum Laden einer mitgeführten wiederaufladbaren Batterie (Akkumulator) verwendet.

Die Bremsleistung und das Maß der Rekuperation sind abhängig von der Leistung des Nabenmotors, der Speicherleistung und der freien Kapazität des Akkumulators.

Zu den bei Fahrrädern fast ausschließlich verwendeten Gleichstrommotoren gehören kommutatorlose oder bürstenbehaftete Scheibenläufermotoren, die für den Direktantrieb geeignet sind. Besonders gut eignen sich permanent erregte Synchronmaschinen, während ebenfalls wartungsfreie Wechselstrom-Asynchronmotoren selten Verwendung finden. Aus der DE 601 29 084 T2 ist es bekannt, für ein Fahrrad mit Hilfsmotor einen bürstenlosen Drei-Phasen-Motor zu verwenden, der ebenfalls als Generator genutzt werden kann.

Aus der DE 20 2006 013 617 U1 und der DE 20 2006 010 679 U1 ist ein Elektroantrieb für Fahrräder und weitere Anwendungen bekannt, wobei der Antriebsmotor ein Nabenmotor beziehungsweise eine Naben-Generator-Motor-Kombination ist, deren Steuerung dafür sorgt, dass bei Betätigung des Bremshebels der Nabenmotor in die Generatorfunktion umschaltet. Zu diesem Zweck wird der Druck des Bremshebels sensorisch erfasst. Je stärker der Bremshebel betätigt wird, umso höher ist die Bremswirkung des Generators und damit die Energierückspeisung in den Akkumulator. Bei verstärktem Druck auf den Bremshebel wird zusätzlich eine mechanische Bremse wirksam, um das Fahrzeug zum Stillstand zu bringen.

In der US 2008/0071436 A1 ist ein Fahrrad mit elektrischem Hilfsantrieb offenbart, wobei die Steuerung des elektrischen Hilfsantriebs darin besteht, den Energieverbrauch über eine bestimmte Distanz zu optimieren. Diesbezüglich können entweder direkt Parameter des Benutzers überwacht werden wie beispielsweise die Pulsfrequenz, der Blutdruck oder der Atemrhythmus, oder aber, im Wege einer Vereinfachung, indirekte Parameter einschließlich einer Fahrtgeschwindigkeit, wobei bei dieser bekannten Steuerung ein entsprechender Eingriff immer dann erfolgt, wenn der Benutzer die Pedale selbst antreibt. Der Eingriff erfolgt zudem auch und insbesondere unterhalb einer vorbestimmten Geschwindigkeit.

Dokument JP 2001030974 A1 stellt den nächsten Stand der Technik der und offenbart die Präambel des Anspruchs 1.

Der vorliegenden Erfindung liegt die Aufgabe zugrunde, eine Hilfsantriebsvorrichtung der vorstehend erläuterten Art dahingehend zu verbessern, dass diese zusätzlich zur Rekuperation des elektrischen Antriebsmotors im Falle seiner Funktion als Generator funktional erweitert werden kann, insbesondere unter sicherheitstechnischen Aspekten. Aufgaben der Erfindung sind zudem ein diesbezügliches Fahrzeug, insbesondere ein Fahrrad, und ein Verfahren zum Betreiben eines derartigen Fahrzeugs bereitzustellen.

Die Lösung dieser Aufgabe wird durch eine Hilfsantriebsvorrichtung für ein Fahrzeug gemäß Patentanspruch 1, ein Fahrzeug gemäß Patentanspruch 6 und ein Verfahren zum Betreiben eines Fahrzeugs gemäß Patentanspruch 7 bereitgestellt. Vorteilhafte Ausführungsformen der Erfindung sind in den Unteransprüchen definiert.

Die Erfindung sieht vor, dass eine Hilfsantriebsvorrichtung der vorstehend erläuterten Art auch ohne den zusätzlichen Einsatz einer mechanischen Bremse zum Zwecke der Geschwindigkeitsregelung nutzbar gemacht werden kann.

Die erfindungsgemäße Hilfsantriebsvorrichtung für ein Fahrzeug umfasst eine Tretkurbelanordnung zum Einleiten menschlicher Kraft in ein Antriebssystem des Fahrzeugs. Fahrzeuge der in Rede stehenden Art können insbesondere Fahrräder sein. In diesem Fall ist eine Tretkurbelanordnung im Sinne der Erfindung beispielsweise eine bekannte Anordnung aus einem Tretlager mit zwei Tretkurbeln und daran angeordneten Pedalen.

Die erfindungsgemäße Hilfsantriebsvorrichtung kann jedoch auch bei anderen Fahrzeugen verwendet werden, beispielsweise bei solchen Fahrzeugen, bei denen die Kraft über einen von Hand betätigten Kurbelmechanismus in das Antriebssystem eingeleitet wird. Eine Tretkurbelanordnung im Sinne der vorliegenden Erfindung ist somit nicht auf durch Füße betätigte Anordnungen beschränkt, sondern umfasst jegliche Anordnungen, mittels derer menschliche Kraft zum Zwecke des Vortriebs in ein Antriebssystem eines Fahrzeugs mit einer Hilfsantriebsvorrichtung der in Rede stehenden Art eingeleitet werden kann.

Die erfindungsgemäße Hilfsantriebsvorrichtung umfasst weiterhin einen Elektromotor, der dazu ausgelegt ist, ein elektrisch erzeugtes Drehmoment in das Antriebssystem des Fahrzeugs einzuleiten. Derartige Elektromotoren können Motoren der Eingangs genannten Art sein. In einer bevorzugten Ausführungsform der Erfindung ist hierzu ein permanent erregter Drei-Phasen-Synchron-Motor vorgesehen.

Die erfindungsgemäße Hilfsantriebsvorrichtung weist zudem eine wiederaufladbare Batterie (Akkumulator) und eine Steuereinrichtung auf, die dazu ausgelegt ist, die aktuelle Drehzahl des Elektromotors zu erfassen und den Elektromotor derart anzusteuern, dass bei bestimmten Fahrzuständen eine Rekuperation erfolgt, mittels derer kinetische Energie zur elektrischen Aufladung der wiederaufladbaren Batterie genutzt wird.

Erfindungsgemäß ist die Steuereinrichtung zudem dahingehend ausgelegt, dass sie den Elektromotor so ansteuert, dass die Rekuperation in einem solchen Maß erfolgt, dass eine aktuelle Drehzahl des Elektromotors einer vorbestimmten Drehzahl des Elektromotors angepasst wird.

Die Drehzahl des Elektromotors korrespondiert mit der Fahrgeschwindigkeit des Fahrzeugs, in dem die Hilfsantriebsvorrichtung verwendet wird. Die erfindungsgemäße Ausführung der Hilfsantriebsvorrichtung, derzufolge die Rekuperation nicht in einem beliebigen Maße, abhängig von den zufällig gegebenen Randbedingungen erfolgt, sondern gesteuert in einer solchen Weise, dass die aktuelle Drehzahl des Elektromotors einer vorbestimmten Drehzahl des Elektromotors angepasst wird, führt somit dazu, dass eine bestimmte Geschwindigkeitsregelung des Fahrzeugs, in dem die Hilfsantriebsvorrichtung verwendet wird, in Verbindung mit einer Rekuperation verwirklicht werden kann.

Die Erfindung stellt somit die Verknüpfung eines Sicherheitsmerkmals mit einem die Reichweite des Fahrzeugs vergrößernden funktionellen Merkmals dar. Rekuperation bei Bergabfahrt führt dazu, dass der Akkumulator aufgeladen werden kann. Dies bedeutet, dass eine Unterstützung des Tretbetriebs insgesamt länger zur Verfügung steht. Anders als beim Stand der Technik wird dieser grundsätzliche Vorteil der Rekuperation gemäß der vorliegenden Erfindung in einer bestimmten sicherheitsrelevanten Weise genutzt. Das Maß, in dem der Elektromotor als Generator betrieben und somit Energie zurückgewonnen (rekuperiert) wird, wird mit dem funktionalen Verhalten des Fahrzeugs, in dem eine entsprechende Hilfsantriebsvorrichtung eingesetzt ist, verbunden. Dies wird nachfolgend an einem Beispiel verdeutlicht.

Hilfsantriebsvorrichtungen der vorliegenden Art ermöglichen es, Steigungen leichter zu bewältigen, da zu dem über die Tretkurbelanordnung von Mensch eingeleiteten Drehmoment ein unterstützendes elektromotorisches Drehmoment hinzukommt. Dieser Aspekt ist insbesondere bei physisch weniger leistungsfähigen Menschen von Bedeutung. Hilfsantriebsvorrichtungen der in Rede stehenden Art werden demnach häufig in Fahrrädern verwendet, die für ältere Personen konzipiert sind. Sie ermöglichen es den älteren Personen, auch bei reduzierter körperlicher Leistungsfähigkeit in einer Umgebung mit deutlichen Steigungen ein Fahrrad weiterhin benutzen zu können.

Wenn es älteren Menschen mit Hilfe einer derartigen Hilfsantriebsvorrichtung gelungen ist, eine relativ steile Steigung zu bewältigen, ist es in der Regel unumgänglich, dass anschließend eine entsprechende Abfahrt bewältigt werden muss. Hierbei wird eine mögliche höhere Fahrgeschwindigkeit grundsätzlich positiv auch von älteren Personen empfunden. Andererseits sind bei Bergabfahrten mit derartigen Fahrrädern Fahrgeschwindigkeiten möglich, die insbesondere ältere Personen beängstigen und zu gefährlichen Situationen führen können. Mit der erfindungsgemäßen funktionalen Verbindung des Grades der Rekuperation mit einer vorbestimmten Drehzahl des Elektromotors, die bei der Verwendung der Hilfsantriebsvorrichtung in einem Fahrzeug einer bestimmten Fahrgeschwindigkeit entspricht, kann somit die Rekuperation dazu genutzt werden, eine sicherheitsrelevante Fahrgeschwindigkeitsregelung zu verwirklichen. Bei einem relativ flachen Gefälle wird somit ein kleineres Maß an Rekuperation verwirklicht als bei einem steileren Gefälle. In beiden Fällen genießt der Fahrer jedoch die Freude, die Bergabfahrt zügig zu genießen. Andererseits wird eine übermäßige Fahrgeschwindigkeit bei einem relativ steilen Gefälle verhindert.

Gemäß einer vorteilhaften Ausgestaltung der Erfindung ist die vorbestimmte Drehzahl des Elektromotors einstellbar. Es versteht sich, dass dies mit der Einstellung einer vorbestimmten Höchstgeschwindigkeit des Fahrzeugs korrespondiert.

In einer weiteren vorteilhaften Ausgestaltung der Erfindung ist die Steuereinrichtung dahingehend ausgelegt, den Elektromotor so anzusteuern, dass er unter Entnahme elektrischer Energie aus der wiederaufladbaren Batterie ein Drehmoment entgegen seiner Drehrichtung in einem solchen Maße entwickelt, dass die aktuelle Drehzahl des Elektromotors der vorbestimmten Drehzahl des Elektromotors angepasst wird.

Wenn eine derartige Ausführungsform der erfindungsgemäßen Hilfsantriebsvorrichtung in einem Fahrzeug verwendet wird, führt dies dazu, dass eine voreingestellte Höchstgeschwindigkeit selbsttätig, das heißt ohne aktives Zutun des Fahrers, und ohne Betätigung einer zusätzlichen mechanischen Bremse eingehalten werden kann. Das vorstehend erläuterte Sicherheitsmerkmal wird somit für den Fall solcher Gefälle erweitert, bei denen die sich einstellende Fahrgeschwindigkeit selbst bei maximal möglicher Rekuperation die voreingestellte Höchstgeschwindigkeit übersteigen würde. Insbesondere älteren Fahrradfahrern wird somit das zuvor beschriebene Sicherheitsgefühl auch im Fall größerer Gefälle, bei denen es von besonderer Wichtigkeit ist, vermittelt.

Bei der erfindungsgemäßen Hilfsantriebsvorrichtung kann die Steuereinrichtung einen Wechselrichter aufweisen, der bei dem Vorgang der Rekuperation eine lastabhängige Kontrollfunktion ausübt, wobei die wiederaufladbare Batterie die Funktion eines Verbrauchers ausübt.

Die Erfindung wird im Folgenden anhand von Ausführungsbeispielen unter Bezug auf die beigefügten Zeichnungen verwiesen, in denen
Fig. 1 eine Prinzipskizze zur Erläuterung der Funktionalität des Vorgangs der gesteuerten Rekuperation ist, und
Fig. 2 ein Flussdiagramm eines entsprechenden Verfahrensablaufs zeigt.

Die erfindungsgemäße Hilfsantriebsvorrichtung hat grundsätzlich einen Aufbau, wie er einleitend unter Bezug auf den Stand der Technik erläutert wurde und beispielhaft in den eingangs zitierten Druckschriften gezeigt ist. Es versteht sich, dass die Erfindung bei einem weiten Feld von derartigen Elektromotoren und diesbezüglichen Anordnungen anwendbar ist. Da dem Fachmann entsprechende Bauformen von Elektromotoren und derartigen Hilfsantriebsvorrichtungen sowie deren Anordnung in Fahrzeugen bekannt ist und somit zum Fachwissen des Fachmanns gehört, wird auf diesbezügliche Darstellungen im Zuge dieser Beschreibung verzichtet.

Zusätzlich wird im Hinblick auf die erfindungsgemäße Funktionalität, die nachfolgend auch mit dem Begriff Bremsassistent bezeichnet wird, die Möglichkeit vorgesehen, bei einem Fahrzeug, bei dem eine derartige Hilfsantriebsvorrichtung verwendet wird, eine Höchstgeschwindigkeit vorzuwählen. Dies kann beispielsweise durch Eingabe in eine Bedieneinheit (nicht gezeigt) erfolgen. Bei der beschriebenen Ausführungsform wird diese Funktion, die auch Speedlimiter genannt wird, jedoch nur dann aktiviert, wenn der Fahrer nicht aktiv pedaliert, das heißt nicht eigene menschliche Kraft über eine Tretkurbelanordnung in ein Antriebssystem des Fahrzeugs einleitet.

In einem derartigen Fall wird der Elektromotor, dem elektrische Energie nicht zugeführt wird, durch das Fahrzeug selbst angetrieben und wirkt dabei als Generator. Er erzeugt dabei eine der Drehgeschwindigkeit proportionale elektromotorische Spannung, die auch EMK genannt wird. Wird der Elektromotor mit einem Verbraucher belastet, so fließt lastabhängig ein entsprechender Strom.

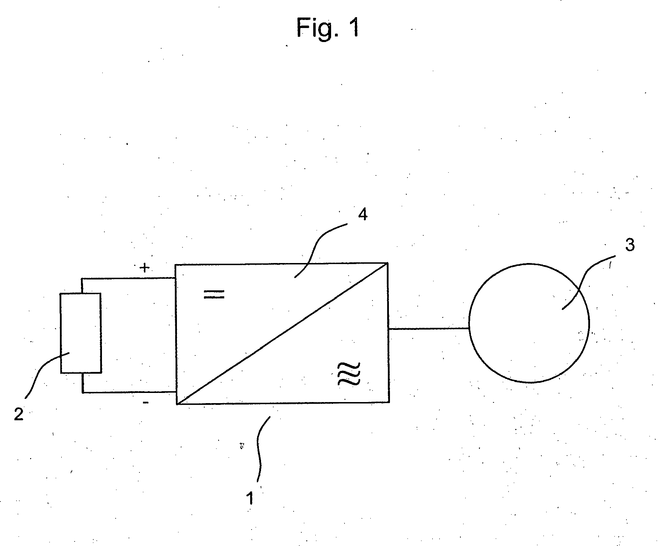

In Fig. 1 sind schematisch Komponenten einer Hilfsantriebsvorrichtung 1 dargestellt, die einen Elektromotor 3 umfassen, der als permanent erregte 3-Phasen-Synchron-Maschine, auch PMSM abgekürzt, ausgeführt sein kann. Der Elektromotor 3 ist ebenso wie eine wiederaufladbare Batterie (Akkumulator) 2 mit einem Wechselrichter 3 verbunden.

Die von einem Benutzer eines mit dieser Hilfsantriebsvorrichtung 1 ausgestatteten Fahrzeugs vorwählbare Höchstgeschwindigkeit entspricht einer bestimmten Drehzahl des Elektromotors und damit einer elektromotorischen Spannung EMK. Eine Geschwindigkeit von 10 km/h kann beispielsweise einem EMK-Antrieb von 12 Volt entsprechen, eine Höchstgeschwindigkeit von 20 km/h einem EMK-Antrieb von 24 Volt und eine Höchstgeschwindigkeit von 30 km/h einem EMK-Antrieb von 36 Volt.

Ein den Wechselrichter steuernder Mikrocontroller überwacht permanent die Drehgeschwindigkeit des Antriebs und damit entsprechend auch die EMK. Hierbei wird unterhalb der vorgewählten Höchstgeschwindigkeit die von einer Leistungsendstufe (MOSFET-Transistoren) generierte Motorspannung ständig so nachgeführt, dass die Spannungsdifferenz zwischen dem Akkumulator 2 und dem Antrieb 0 Volt beträgt. Somit wird sichergestellt, dass es zu keinem Stromfluss zwischen Akkupack und Antrieb kommt. Es wird in diesem Betriebszustand somit weder angetrieben, noch gebremst.

Alternativ hierzu kann die Endstufe der Motorsteuerung auch komplett ausgeschaltet bleiben. Hierdurch wird dieselbe Wirkung erzielt.

Beim Erreichen der vorgewählten Höchstgeschwindigkeit beginnt der Mikrocontroller, die von der Leistungsendstufe generierte Motorspannung gegenüber der Motor-EMK zu reduzieren, was zu einem Stromfluss von dem Elektromotor 3 Richtung Akkumulator 2 führt. Dies hat einen Bremsvorgang zur Folge.

Dabei regelt der Mikrocontroller die Spannungsdifferenz in einer solchen Weise, dass die vom Benutzer vorgewählte Höchstgeschwindigkeit nicht wesentlich überschritten wird. Hierzu wird ein PI-Regler verwendet, der somit als Geschwindigkeitsbegrenzer dient und in der Lage ist, einen Betriebsquadrantenwechsel vorzunehmen.

Zudem überwacht der Controller den maximalen Rekuperationsstrom, der sich automatisch aus diesem Betriebsverhalten ergibt. Dieser maximale Rekuperationsstrom, und damit die Bremsleistung, ist von dem aktuellen Ladezustand des Akkumulators 2 abhängig.

Dementsprechend muss die Bremsfunktion gegebenenfalls sukzessive reduziert werden, was unter Umständen zu einer Überschreitung der vorgewählten Höchstgeschwindigkeit führen kann. Insbesondere dann, wenn der Akkumulator keine Energie mehr aufnehmen kann, weil er vollständig geladen ist, kann die beschriebene Bremsfunktion nicht ausgeführt und muss daher deaktiviert werden.

Wenn die aktuelle Geschwindigkeit des Fahrzeugs unter die vom Benutzer vorgewählte Höchstgeschwindigkeit fällt, wird der Speedlimiter vom Mikrocontroller automatisch deaktiviert. Dies geschieht auch dann, wenn der Radfahrer beginnt, aktiv zu pedalieren, das heißt von sich aus wieder Energie in das Antriebssystem des Fahrzeugs einleitet.

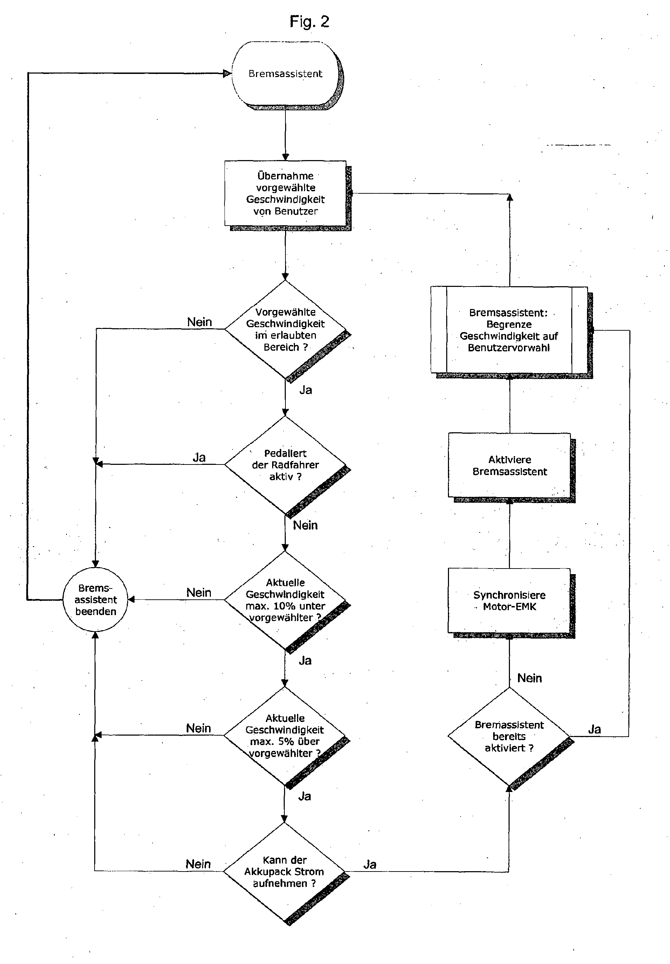

Der die Rekuperation an sich betreffende Teil des Verfahrens zur Steuerung eines Fahrzeugs, das mit der erfindungsgemäßen Hilfsantriebsvorrichtung versehen ist, ist in Fig. 2 dargestellt. Bei der Bremsassistent genannten Funktionalität wird zunächst eine vom Benutzer vorgewählte Geschwindigkeit erfasst. In einer ersten Abfrage wird festgestellt, ob diese vorgewählte Geschwindigkeit in einem erlaubten Bereich liegt. Hierdurch kann sichergestellt werden, dass eine entsprechende Geschwindigkeitsregelung nur in einem aus physikalischtechnischer Sicht sowie fahrtechnischer Sicht sinnvollem Bereich durchgeführt wird. Liegt die vorgewählte Geschwindigkeit nicht im erlaubten Bereich, so wird die Bremsassistentenfunktion beendet.

Liegt die vorgewählte Geschwindigkeit im erlaubten Bereich, so wird in einem nächsten Schritt festgestellt, ob der Radfahrer aktiv pedaliert, das heißt, ob der Radfahrer menschliche Kraft in das Antriebssystem des Fahrzeugs über eine Tretkurbelanordnung einleitet. Ist dies der Fall, so wird die Bremsassistentenfunktion ebenfalls beendet. Ist dies nicht der Fall, wird die aktuelle Geschwindigkeit des Fahrzeugs ermittelt und mit der vorgewählten Geschwindigkeit verglichen. Liegt die aktuelle Geschwindigkeit mehr als 10% unter der vorgewählten Geschwindigkeit, wird die Bremsassistentenfunktion beendet. Liegt die aktuelle Geschwindigkeit nur maximal 10% unter der vorgewählten Geschwindigkeit, wird im nächsten Schritt festgestellt, ob die aktuelle Geschwindigkeit maximal 5% über der vorgewählten Geschwindigkeit liegt. Ist dies nicht der Fall, wird der Bremsassistent beendet. Liegt die aktuelle Geschwindigkeit mehr als 5% über der vorgewählten Geschwindigkeit, wird zum nächsten Verfahrensschritt übergegangen.

Es versteht sich, dass die genannten Werte von 10% und 5% lediglich beispielhaft sind. Je nach Gegebenheiten können andere Grenzwerte gewählt werden, um die Regelung bezüglich der Höchstgeschwindigkeit durchzuführen.

Als nächster Schritt wird festgestellt, ob der Akkumulator 2 weiter Strom aufnehmen kann. Ist dies nicht der Fall, wird die Bremsassistentenfunktion beendet. Ist dies der Fall, wird festgestellt, ob der Bremsassistent bereits aktiviert ist. Wenn diese Frage verneint wird, wird die Motor-EMK synchronisiert und der Bremsassistent wird aktiviert.

Der aktivierte Bremsassistent begrenzt daraufhin die Geschwindigkeit, wie vorstehend erläutert.

Sollte zur Begrenzung der gewünschten Fahrgeschwindigkeit die generierte Rekuperationsleistung nicht ausreichend sein, so kann der Wechselrichter unter Entnahme elektrischer Energie aus dem Akkumulator dem Antrieb die nötige elektrische Leistung zuführen, damit das nötige Bremsdrehmoment zur Begrenzung der Fahrgeschwindigkeit erzeugt werden kann.

### ZUSAMMENFASSUNG DER OFFENBARUNG

Die Erfindung betrifft eine Hilfsantriebsvorrichtung für ein Fahrzeug, die menschlich in ein Antriebssystem eingeleitete Kraft elektromotorisch ergänzt. Die Rekuperation bei Schubbetrieb kann gesteuert so ausgeführt werden, dass eine vorbestimmte Motordrehzahl eingehalten wird. Bei einem Fahrzeug mit einer derartigen Hilfsantriebsvorrichtung wird somit eine vorgewählte Höchstgeschwindigkeit durch gesteuerte Rekuperation eingehalten. Dies kann ein Ansteuern des Elektromotors zur Abgabe eines Drehmoments entgegen der Drehrichtung des Elektromotors umfassen, wenn eine Anpassung der aktuellen Fahrgeschwindigkeit an die vorbestimmte Fahrgeschwindigkeit mittels Rekuperation allein nicht möglich ist, wobei die Energie zum Betreiben des Elektromotors teilweise der wiederaufladbaren Batterie entnommen wird.

## Patentansprüche

1. Hilfsantriebsvorrichtung für ein Fahrzeug, insbesondere für ein Fahrrad, umfassend:
eine Tretkurbelanordnung zum Einleiten menschlicher Kraft in ein Antriebssystem des Fahrzeugs,
einen Elektromotor, der dazu ausgelegt ist, ein elektrisch erzeugtes Drehmoment in das Antriebssystem einzuleiten,
eine wiederaufladbare Batterie und
eine Steuereinrichtung, die dazu ausgelegt ist, die aktuelle Drehzahl des Elektromotors zu erfassen und den Elektromotor derart anzusteuern, dass bei bestimmten Fahrzuständen eine Rekuperation erfolgt, mittels derer kinetische Energie zur elektrischen Aufladung der wiederaufladbaren Batterie genutzt wird,
**dass** die Steuereinrichtung dahingehend ausgelegt ist, den Elektromotor so anzusteuern, dass die Rekuperation in Form einer Bremsassistent Funktionalität in einem solchen Maße erfolgt, dass eine aktuelle Drehzahl des Elektromotors einer vorbestimmten Drehzahl des Elektromotors angepasst wird,
**dadurch gekennzeichnet**,
wobei unterhalb der vorbestimmten Drehzahl im Rahmen der Bremsassistent Funktionalität weder ein elektrischer Antrieb noch ein elektrischer Bremsvorgang erfolgt und bei Erreichen der vorbestimmten Drehzahl ein Bremsvorgang durch Stromfluss von dem Elektromotor Richtung wiederaufladbare Batterie erfolgt und
wobei die Bremsassistent Funktionalität nur wirksam ist, wenn keine menschliche Kraft über die Tretkurbelanordnung in das Antriebssystem des Fahrzeugs eingeleitet wird.

2. Antriebsvorrichtung nach Anspruch 1, **dadurch gekennzeichnet**, die vorbestimmte Drehzahl des Elektromotors einstellbar ist.

3. Antriebsvorrichtung nach Anspruch 1 oder 2, **dadurch gekennzeichnet, dass** die Steuereinrichtung dahingehend ausgelegt ist, den Elektromotor so anzusteuern, dass er unter Entnahme elektrischer Energie aus der wiederaufladbaren Batterie ein Drehmoment entgegen seiner Drehrichtung in einem solchen Maße entwickelt, dass die aktuelle Drehzahl des Elektromotors der vorbestimmten Drehzahl des Elektromotors angepasst wird.

4. Antriebsvorrichtung nach einem der vorstehenden Ansprüche, **dadurch gekennzeichnet, dass** die Steuereinrichtung einen Wechselrichter aufweist, der bei dem Vorgang der Rekuperation eine lastabhängige Kontrollfunktion ausübt, wobei die wiederaufladbare Batterie die Funktion eines Verbrauchers ausübt.

5. Antriebsvorrichtung nach einem der vorstehenden Ansprüche, **dadurch gekennzeichnet, dass** der Elektromotor ein permanenterregter 3-Phasen-Synchronmotor ist.

6. Fahrzeug, insbesondere Fahrrad, mit einer Antriebsvorrichtung nach einem der vorstehenden Ansprüche 1 bis 5.

7. Verfahren zum Betreiben eines Fahrzeugs nach Anspruch 6, umfassend die Schritte:
Ermitteln einer aktuellen Fahrgeschwindigkeit des Fahrzeugs,
Vergleichen der aktuellen Fahrgeschwindigkeit mit einer vorbestimmten Geschwindigkeit,
Ermitteln eines von einem Benutzer in die Tretkurbelanordnung eingebrachten Drehmoments,
Ansteuern des Elektromotors mittels der Steuereinrichtung zur Abgabe eines Hilfsdrehmoments in Drehrichtung des Elektromotors dann, wenn ein in die Tretkurbelanordnung eingebrachtes Drehmoment größer Null ermittelt wird, wobei das Hilfsdrehmoment in Abhängigkeit von in der Steuereinrichtung hinterlegten Daten und Funktionen und von der Steuereinrichtung erhaltenen Parametern festgelegt wird und den Wert Null enthalten kann und wobei die Energie zum Betreiben des Elektromotors aus der wiederaufladbaren Batterie entnommen wird, und
Ansteuern des Elektromotors zur Aufladung der wiederaufladbaren Batterie im Rahmen einer Bremsassistent Funktionalität in Abhängigkeit von dem Verhältnis der aktuellen Fahrgeschwindigkeit zu der vorbestimmten Geschwindigkeit, wenn für das in die Tretkurbelanordnung eingebrachte Drehmoment der Wert Null ermittelt wird,
wobei im Rahmen der Bremsassistent Funktionalität unterhalb der vorbestimmten Drehzahl weder ein elektrischer Antrieb noch ein elektrischer Bremsvorgang erfolgt und bei Erreichen der vorbestimmten Drehzahl ein Bremsvorgang durch Stromfluss von dem Elektromotor Richtung wiederaufladbare Batterie erfolgt und
wobei die Bremsassistent Funktionalität nur wirksam ist, wenn keine menschliche Kraft über die Tretkurbelanordnung in das Antriebssystem des Fahrzeugs eingeleitet wird.

8. Verfahren nach Anspruch 7, wobei der Elektromotor zur Aufladung der wiederaufladbaren Batterie dann angesteuert wird, wenn die aktuelle Fahrgeschwindigkeit die vorbestimmte Fahrgeschwindigkeit um einen bestimmten Wert überschreitet, und die Ansteuerung so erfolgt, dass die aktuelle Fahrgeschwindigkeit der vorbestimmten Fahrgeschwindigkeit angepasst wird.

9. Verfahrem nach Anspruch 7 oder 8, mit dem weiteren Schritt:
Ermitteln des Ladezustands der wiederaufladbaren Batterie, wobei der Elektromotor zur Aufladung der wiederaufladbaren Batterie angesteuert wird in Abhängigkeit von dem Ladezustand der wiederaufladbaren Batterie.

10. Verfahren nach einem der Ansprüche 7 bis 9, umfassend den weiteren Schritt:
Ansteuern des Elektromotors mittels der Steuereinrichtung zur Abgabe eines Drehmoments entgegen der Drehrichtung des Elektromotors dann, wenn eine Anpassung der aktuellen Fahrgeschwindigkeit an die vorbestimmte Fahrgeschwindigkeit mittels Rekuperation allein nicht möglich ist, wobei die Energie zum Betreiben des Elektromotors teilweise der wiederaufladbaren Batterie entnommen wird.

## Claims

1. Auxiliary drive device for a vehicle, particularly a bicycle, comprising:
a pedal crank assembly for inducing human power into a drive system of the vehicle,
an electric motor, adapted to induce electrically generated torque into said drive system,
a rechargeable battery and
a control device, adapted to detect the current speed of rotation of said electric motor and to control said electric motor such that in case of specific driving conditions recuperation is effected by which kinetic energy is used for electrically charging said rechargeable battery,
wherein said control device is adapted to control said electric motor such that said recuperation in the form of a brake assistant functionality is effected to such an extent that a current speed of rotation of said electric motor is made to match a predetermined speed of rotation of said electric motor,
**characterized in that**
below said predetermined speed of rotation, in the course of the brake assistant functionality, neither electric propulsion nor electric braking operation is effected, and, upon reaching the predetermined speed of rotation, a braking operation is effected via current flow from said electric motor to said rechargeable battery and
wherein the brake assistant functionality is only effective if no human power is induced into said pedal crank assembly of said drive system of said vehicle.

2. Drive device according to claim 1, **characterized in that** said predetermined speed of rotation of said electric motor is adjustable.

3. Drive device according to claim 1 or 2, **characterized in that** said control device is adapted to control said electric motor such that upon taking electric energy from said rechargeable battery a torque against its direction of rotation is generated to such an extent that the current speed of rotation of said electric motor is made to match the predetermined speed of rotation of said electric motor.

4. Drive device according to one of the proceeding claims, **characterized in that** said control device comprises an inverter which performs a load dependent control function concerning the process of recuperation, wherein said rechargeable battery performs the function of a consumer.

5. Drive device according to one of the proceeding claims, **characterized in that** said electric motor is a permanently excited 3-phase synchronous motor.

6. Vehicle, particularly bicycle, having a drive device according to one of the proceeding claims 1 to 5.

7. Process for operating a vehicle according to claim 6, comprising the steps:
determining a current driving speed of said vehicle,
comparing the current driving speed with a predetermined speed,
detecting a torque induced by a user into the pedal crank assembly,
controlling said electric motor by a control device to supply an auxiliary torque in the direction of rotation of said electric motor, if a torque induced into the pedal crank assembly is larger than zero, wherein said auxiliary torque is determined depending on data and function stored in the control device and parameters received by the control device and can include the value zero and wherein the energy for operating the electric motor is taken from said rechargeable battery and
controlling said electric motor for charging said rechargeable battery in the course of a brake assistant functionality depending on the relationship between the current driving speed and the predetermined speed, if for the torque induced into the pedal crank assembly the value zero is determined,
wherein in the course of the brake assistant functionality below the predetermined speed of rotation neither an electric propulsion nor an electric braking operation is effected and upon reaching the predetermined speed of rotation a braking operation is effected by current flow from said electric motor to said rechargeable battery and
wherein the brake assistant functionality is only effective if no human power is induced into said drive system of said vehicle via said pedal crank assembly.

8. Method according to claim 7, wherein said electric motor is controlled to recharge said rechargeable battery, if the current driving speed exceeds the predetermined driving speed by a certain value and the control is effected such that the current driving speed is made to match the predetermined driving speed.

9. Method according to claim 7 or 8, having the further step:
determining the state of charge of said rechargeable battery, wherein said electric motor is controlled to charge said rechargeable battery depending on the state of charge of said rechargeable battery.

10. Method according to one of claims 7 to 9, comprising the further step:
controlling said electric motor by said control device to provide a torque contrary to the direction of rotation of said electric motor, if it is not possible to make the current driving speed match the predetermined driving speed by recuperation only, wherein the energy for operating said electric motor is partially taken from said rechargeable battery.

## Revendications

1. Dispositif d'entraînement auxiliaire pour un véhicule, en particulier pour une bicyclette, comprenant:
un agencement de pédalier pour induire une force humaine dans un système d'entraînement du véhicule,
un moteur électrique, conçu pour induire un couple produit électriquement dans le système d'entraînement,
une batterie rechargeable, et
un dispositif de commande, conçu pour détecter la vitesse de rotation actuelle du moteur électrique et pour commander le moteur électrique de telle manière que, dans des états de conduites certains, une récupération s'effectue, au moyen de laquelle une énergie cinétique est utilisée pour recharger électriquement la batterie rechargeable,
le dispositif de commande étant conçu de manière à commander le moteur électrique de telle sorte que la récupération s'effectue sous la forme d'une fonctionnalité d'assistance au freinage dans une telle mesure qu'une vitesse de rotation actuelle du moteur électrique est adaptée à une vitesse de rotation prédéterminée du moteur électrique,
**caractérisé par le fait que**
dans le cadre de la fonctionnalité d'assistance au freinage, il n'est effectué, en dessous de la vitesse de rotation prédéterminée, ni entraînement électrique, ni opération de freinage électrique et lorsque la vitesse de rotation prédéterminée est atteinte, une opération de freinage s'effectue par un courant circulant, du moteur électrique vers la batterie rechargeable et
la fonctionnalité d'assistance au freinage n'est active que lorsqu'aucune force humaine n'est induite par le biais de l'agencement de pédalier dans le système d'entraînement du véhicule.

2. Dispositif d'entraînement selon la revendication 1, **caractérisé par le fait que** la vitesse de rotation prédéterminée du moteur électrique est réglable.

3. Dispositif d'entraînement selon la revendication 1 ou 2, **caractérisé par le fait que** le dispositif de commande est conçu de manière à commander le moteur électrique de telle sorte que, en prélevant de l'énergie électrique de la batterie rechargeable, il développe un couple dans le sens inverse de son sens de rotation dans une telle mesure que la vitesse de rotation actuelle du moteur électrique est adaptée à la vitesse de rotation prédéterminée du moteur électrique.

4. Dispositif d'entraînement selon l'une des revendications précédentes, **caractérisé par le fait que** le dispositif de commande présente un onduleur qui exerce, lors de l'opération de récupération, une fonction de contrôle dépendant de la charge, la batterie rechargeable exerçant la fonction de consommateur.

5. Dispositif d'entraînement selon l'une des revendications précédentes, **caractérisé par le fait que** le moteur électrique est un moteur synchrone triphasé à aimant permanent.

6. Véhicule, en particulier bicyclette, comportant un dispositif d'entraînement selon l'une des revendications précédentes 1 à 5.

7. Procédé de fonctionnement d'un véhicule selon la revendication 6, comprenant les étapes suivantes:
détermination d'une vitesse de conduite actuelle du véhicule,
comparaison de la vitesse de conduite actuelle avec une vitesse prédéterminée,
détermination d'un couple induit par un utilisateur dans l'agencement de pédalier,
commande du moteur électrique au moyen du dispositif de commande pour l'alimentation d'un couple auxiliaire dans le sens de rotation du moteur électrique au moment où un couple induit dans l'agencement de pédalier supérieur à zéro est déterminé, le couple auxiliaire étant déterminé en fonction de données et de fonctions enregistrées dans le dispositif de commande et de paramètres réçus par le dispositif de commande et pouvant contenir la valeur zéro et l'énergie pour faire fonctionner le moteur électrique étant prélevée de la batterie rechargeable, et
commande du moteur électrique pour la recharge de la batterie rechargeable dans le cadre d'une fonctionnalité d'assistance au freinage en fonction du rapport entre la vitesse de conduite actuelle et la vitesse prédéterminée lorsque, pour le couple induit dans l'agencement de pédalier, la valeur zéro est déterminée,
ni entraînement électrique, ni opération de freinage n'étant effectué(e) en dessous de la vitesse de rotation prédéterminée dans le cadre de la fonctionnalité d'assistance au freinage et, lorsque la vitesse de rotation prédéterminée est atteinte, une opération de freinage s'effectuant par un courant circulant du moteur électrique vers la batterie rechargeable et
la fonctionnalité d'assistance au freinage n'étant active que lorsqu'aucune force humaine n'est induite par le biais de l'agencement de pédalier dans le système d'entraînement du véhicule.

8. Procédé selon la revendication 7, dans lequel le moteur électrique est commandé pour recharger la batterie rechargeable au moment où la vitesse de conduite actuelle dépasse la vitesse de conduite prédéterminée d'une valeur déterminée et la commande s'effectue de telle manière que la vitesse de conduite actuelle est adaptée à la vitesse de conduite prédéterminée.

9. Procédé selon la revendication 7 ou 8, comportant l'étape supplémentaire:
détermination du niveau de charge de la batterie rechargeable, le moteur électrique étant commandé pour recharger la batterie rechargeable en fonction du niveau de charge de la batterie rechargeable.

10. Procédé selon l'une des revendications 7 à 9, comprenant l'étape supplémentaire:
commande du moteur électrique au moyen du dispositif de commande pour l'alimentation d'un couple dans le sens opposé au sens de rotation du moteur électrique au moment où une adaptation de la vitesse de conduite actuelle à la vitesse de conduite prédéterminée au moyen de la récupération seule n'est pas possible, l'énergie pour faire fonctionner le moteur électrique étant partiellement prélevée de la batterie rechargeable.
